# FASCICULE DE BREVET EUROPEEN

(11) **EP 3 955 433 B1**
(45) Date de publication et mention de la délivrance du brevet: **08.10.2025**
(21) Numéro de dépôt: 21190999.9
(22) Date de dépôt: 12.08.2021
(51) Int. Cl.: H02K 7/14, H02K 1/14, H02K 7/116, H02K 11/215

(54) **DISTRIBUTEUR FLUIDIQUE A FONCTIONNEMENT AMELIORE**
FLUIDVERTEILER MIT VERBESSERTER FUNKTION
FLUID DISPENSER WITH IMPROVED OPERATION

(30) Priorité: 14.08.2020 FR 2008504
(43) Date de publication de la demande: 16.02.2022
(73) Titulaire: Bontaz Centre, 74460 Marnaz (FR)
(72) Inventeur: TAUPEAU, Anthony, 74410 SAINT-JORIOZ (FR); BONNEVAY, Nicolas, 74000 ANNECY (FR); CASARA, Fabien, 74560 LA MURAZ (FR)
(74) Mandataire: Brevalex

(56) Documents cités:
- EP-A1- 3 483 454
- JP-A- 2015 231 275

## Description

### DOMAINE TECHNIQUE ET ÉTAT DE LA TECHNIQUE ANTÉRIEURE

La présente invention se rapporte à un distributeur fluidique piloté par un motoréducteur offrant un fonctionnement amélioré.

Dans l'industrie automobile, on utilise des distributeurs fluidiques également appelés vannes, pilotés en tout ou rien ou proportionnellement par un motoréducteur. Ces vannes servent par exemple à gérer l'alimentation en fluide de refroidissement, en carburant, en huile...

Le motoréducteur peut comporter un rotor portant des aimants, logé dans un stator comportant des bobines. Le réducteur est logé dans le rotor. L'arbre de sortie est coaxial au rotor. Un tel motoréducteur est décrit dans le document WO2019/129984.

Ce motoréducteur présente un encombrement réduit et est ainsi adapté pour piloter des vannes, par exemple des distributeurs hydrauliques équipant des véhicules automobiles. En outre il met en œuvre un axe de centrage qui assure le guidage, le recentrage de tous les éléments mobiles et assure également la fonction de palier de glissement pour les éléments mobiles. L'usure du réducteur est limitée.

Le motoréducteur comporte des capteurs pour la gestion du moteur et au moins un capteur de position angulaire de l'arbre de sortie monté, les capteurs sont montés sur une carte électronique. Les capteurs de gestion du moteur et le capteur de position sont sensibles à un champ magnétique, par exemple il s'agit de capteurs à effet Hall.

Les capteurs de gestion sont sensibles à l'aimant à plusieurs pôles du moteur, et le capteur de position est sensible à un aimant monté fixe en rotation sur l'arbre de sortie.

Or il a été constaté que l'aimant de position pouvait perturber le fonctionnement des capteurs de gestion du moteur, et que l'aimant du moteur pouvait perturber le fonctionnement du capteur de position.

Le document EP 3 483 454 décrit une commande hydraulique comprenant au moins une vanne hydraulique, chaque vanne hydraulique comprenant un distributeur hydraulique et un actionneur électrique. Le distributeur hydraulique comprend un tiroir de vanne monté coulissant dans un corps comprenant des canaux hydrauliques. L'actionneur électrique est fixé au corps de distributeur hydraulique et comprend un moteur électrique, un circuit électronique comportant une carte de circuit, un organe de sortie à déplacement linéaire couplé au tiroir de commande, un réducteur comportant des roues d'engrenages couplant le moteur à l'organe de sortie, et un boîtier dans lequel le moteur électrique, le circuit électronique et le réducteur sont montés.

### EXPOSÉ DE L'INVENTION

C'est par conséquent un but de la présente invention d'offrir un distributeur fluidique piloté par un motoréducteur dont le fonctionnement est amélioré.

Le but énoncé ci-dessus est atteint par un distributeur fluidique comportant un corps de vanne muni d'un noyau, un motoréducteur comportant un stator, un rotor, un réducteur et un arbre de sortie duquel est solidaire en rotation le noyau. Des capteurs de gestion du moteur sont montés sur une première carte électronique, au moins un capteur de position de l'arbre de sortie est monté sur une deuxième carte électronique éloignée axialement de la première carte électronique. Un aimant est monté fixe en rotation sur l'arbre de sortie dont le mouvement en rotation est détecté par le capteur de position. L'emplacement du capteur de position par rapport à l'arbre de sortie et l'extension angulaire de l'aimant sont telles que le champ magnétique de l'aimant est un effet limité, voire nul, sur les capteurs de gestion.

D'une part en éloignant axialement le capteur de position des capteurs de gestion, les perturbations dues à l'aimant du moteur sur le capteur de position sont réduites, et d'autre part, en décalant angulairement l'aimant de position des capteurs de gestion, les perturbations de l'aimant de position sur les capteurs de gestion.

Le fonctionnement du distributeur est alors amélioré.

De manière avantageuse, la première carte électronique est située dans le boîtier du motoréducteur et la deuxième carte est située à l'extérieur du boîtier.

L'aimant de position présente avantageusement une extension angulaire telle qu'il ne vient jamais à l'aplomb de l'un des capteurs de gestion.

La présente demande a alors pour objet un distributeur fluidique rotatif comportant un corps de vanne avec au moins un orifice d'entrée d'un fluide et un orifice de sortie du fluide, un noyau apte à autoriser ou interrompre l'écoulement du fluide entre l'orifice d'entrée et l'orifice de sortie, ledit noyau étant mobile en rotation autour d'un axe longitudinal et configuré pour prendre deux positions angulaires extrêmes, un motoréducteur comprenant un réducteur, un moteur électrique sans balai et un arbre de sortie d'axe longitudinal, le noyau étant solidaire en rotation dudit arbre de sortie, des capteurs de gestion du moteur électrique montés sur une première carte électronique en regard d'une face latérale d'un rotor du motoréducteur, au moins un capteur de position angulaire pour détecter la position angulaire de l'arbre de sortie, monté sur un deuxième carte électronique, la première carte électronique et la deuxième carte électronique étant disposées dans deux plans distincts normaux à l'axe longitudinal, un aimant permanent monté fixe en rotation sur l'arbre de sortie et disposé de sorte à être détecté par le capteur de position angulaire. Ledit aimant permanent a la forme d'un arc de cercle dont la position et l'extension angulaire sont telles que, quelle que soit la position angulaire de l'arbre de sortie pour placer le noyau dans toute position entre ses positions angulaires extrêmes, en considérant une projection dudit aimant et la projection des capteurs de gestion dans un même plan normal à l'axe longitudinal, la projection de l'aimant permanent ne soit pas en regard de la projection des capteurs de gestion en considérant une direction radiale.

Dans un exemple préféré, le motoréducteur comporte un carter logeant le moteur et le réducteur et dans lequel la première carte électronique est logée dans le carter et la deuxième carte électronique est disposée à l'extérieur du carter entre le carter et corps de vanne.

Avantageusement, l'aimant permanent est un aimant à aimantation diamétrale.

Dans un exemple de réalisation, le corps de vanne comporte deux orifices de sortie, et l'une des positions angulaires extrêmes correspond au moins principalement à un écoulement entre l'orifice d'entrée et l'un des orifices de sortie, et l'autre position angulaire extrême correspond au moins principalement à un écoulement entre l'orifice d'entrée et l'un des orifices de sortie.

Le distributeur fluidique rotatif comporte avantageusement des moyens d'orientation de l'aimant permanent par rapport à l'arbre de sortie de sorte à positionner le pôle nord et le pôle sud de l'aimant dans une orientation donnée par rapport à l'arbre de sortie.

Les moyens d'orientation comportent par exemple un lamage formé dans l'aimant coopérant avec un méplat porté par l'arbre de sortie et un élément en saillie porté par l'arbre de sortie ou l'aimant permanent coopérant un élément en creux porté par l'aimant permanent ou l'arbre de sortie respectivement.

L'aimant permanent est de préférence collé sur l'arbre de sortie.

Le moteur peut comporter des bobines fixées et connectées électriquement à la première carte électronique.

Le motoréducteur comporte avantageusement trois bobines ou un multiple de trois.

De préférence, le réducteur est logé au moins en partie dans le rotor.

Le réducteur est avantageusement un réducteur planétaire, le motoréducteur comportant un axe unique formant l'axe de rotation du rotor et l'axe du réducteur planétaire.

### BRÈVE DESCRIPTION DES DESSINS

La présente invention sera mieux comprise sur la base de la description qui va suivre et des dessins en annexe sur lesquels:
La figure 1 est une vue en coupe longitudinale d'un exemple d'un distributeur hydraulique selon l'invention.
La figure 2 est une vue en perspective du motoréducteur de la figure 1, les cartes électroniques et l'arbre de sortie étant représentés à l'extérieur du motoréducteur.
La figure 3A est une vue de dessus d'un exemple d'aimant du capteur de position.
La figure 3B est une vue en perspective de l'aimant de la figure 3A.
La figure 3C est une vue de côté montrant les positions relatives de l'aimant de position et du capteur de position.
La figure 3D est une vue en perspective de l'arbre de sortie et de l'aimant de position.
La figure 4A est une vue de dessous du motoréducteur de la figure 2, pour lequel certaines pièces ont été omises pour montrer les capteurs et l'aimant de position, l'aimant de position étant dans une première position de l'arbre de sortie.
La figure 4B est une vue de dessous du motoréducteur similaire à celle de la figure 4A, l'aimant de position étant dans une deuxième position de l'arbre de sortie.
La figure 4C est une vue de dessous du motoréducteur similaire à celle de la figure 4A, l'aimant de position étant dans une troisième position de l'arbre de sortie.
La figure 5 est une représentation graphique de la variation du champ magnétique B (mT) vue par le capteur de position en fonction de l'angle β (°) entre le capteur de position et l'aimant.
La figure 6 est une variation de la tension E(V) émise par le capteur de position en fonction de l'angle β (°) entre le capteur de position et l'aimant.

### EXPOSÉ DÉTAILLÉ DE MODES DE RÉALISATION PARTICULIERS

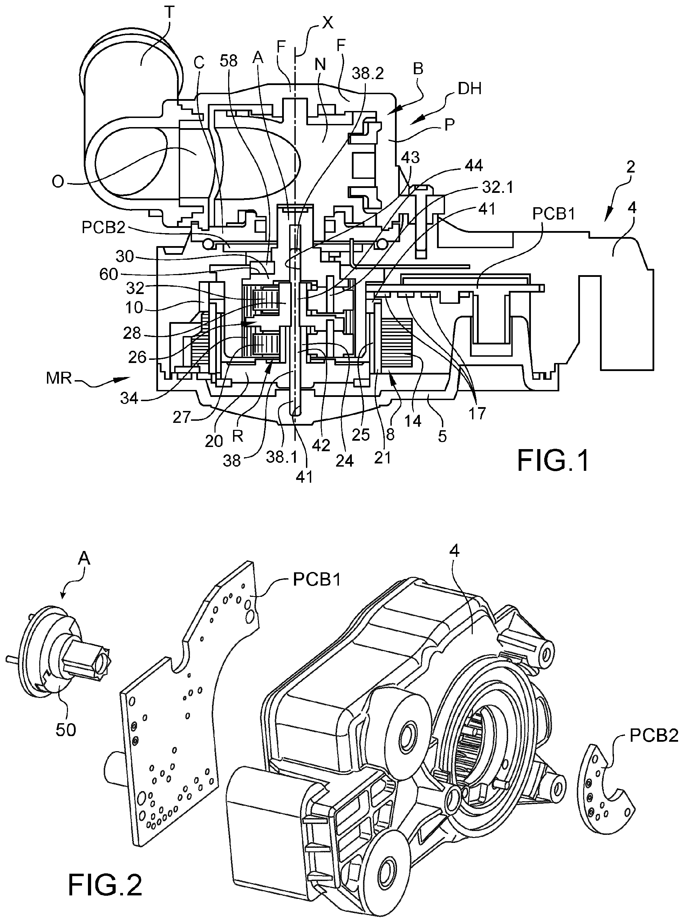

Sur la figure 1, on peut voir une vue en coupe longitudinale d'exemple d'un distributeur hydraulique DH piloté par un motoréducteur MR selon l'invention. Sur la figure 2 on peut voir le motoréducteur seul.

Le distributeur DH comporte un corps de vanne B de forme essentiellement cylindrique de révolution autour d'un axe X, et un noyau N monté dans le corps de vanne B et apte à tourner dans le corps de vanne B.

Dans l'exemple représenté, le corps de vanne B comporte un fond F et une paroi latérale cylindrique P d'un seul tenant, et un couvercle de vanne C pour fermer le corps de vanne. Le couvercle de vanne C est, par exemple, solidarisé au corps de vanne B par soudage, par exemple par soudage à ultrason.

Le corps de vanne B comporte un orifice d'alimentation (non visible) formé dans la paroi latérale P et prolongé par un conduit destiné à une connexion à une source de liquide, et au moins 2 orifices de sortie O formé également dans la paroi latérale P, se prolongeant chacun par un conduit T destiné à amener le liquide vers une zone donnée, par exemple une zone à refroidir. Le corps de vanne B définit une chambre hydraulique.

Les orifices d'entrée et de sortie sont répartis sur la paroi autour de l'axe X

Le noyau N est monté dans la chambre hydraulique et est en prise avec l'arbre de sortie A du motoréducteur A.

Le motoréducteur s'étend le long d'un axe longitudinal X. Il comporte un carter 2 dans lequel sont logés le moteur électrique M et le réducteur planétaire R. Le carter 2 protège le moteur et le réducteur de l'environnement extérieur. Une extrémité longitudinale de l'arbre de sortie A sur laquelle le noyau est en prise faisant saillie du carter 2 par une ouverture 3.

Dans la suite de la description, l'extrémité longitudinale du motoréducteur comportant l'arbre de sortie A sera désignée « extrémité aval », l'autre extrémité longitudinale du motoréducteur sera désignée « extrémité amont ». L'orientation des différents éléments du motoréducteur par rapport à ces extrémités pourra être repérée par le terme « amont » ou « aval ».

Le carter 2 comporte un boîtier 4 et un capot 5 fermant le boîtier.

Le moteur électrique est un moteur sans balai ou brushless en terminologie anglo-saxonne, comporte un stator 8, un rotor 10 disposé dans le stator 8.

Le stator 8 est réalisé par exemple dans un empilement de tôles d'acier magnétique, par exemple en acier M270-35A. D'autres aciers tels que le M235-35A, M250-35A, et le M330-35A peuvent également être utilisés de manière non limitative.

Par exemple, le stator est composé de 28 tôles de 0,35mm d'épaisseur chacune. Il présente une épaisseur totale de 9,8 mm.

Le stator comporte un logement destiné à loger le rotor 10; le logement traverse de part en part le stator 8 sur toute son épaisseur.

Chaque bobine comporte par exemple un corps en plastique appelé carcasse, deux cosses ou fiches de connexion, et un fil bobiné sur le corps, et connecté par ses deux extrémités aux deux cosses qui sont destinées à être connectées à la carte électronique.

Sur les figures 1 et 2, on peut voir une première carte électronique PCB1 à laquelle les broches des bobines 12 sont connectées et qui sert à piloter le rotor. Par exemple, les bobines 12 sont connectées électriquement et mécaniquement à la première carte électronique PCB1 par des cosses qui sont connectées électriquement à la bobine par serrage mécanique.

Les bobines 12 sont dans l'exemple représenté au nombre de trois, et de manière générale leur nombre est égal à 3n, avec n un entier au moins égal à 1. Les bobines 12 sont disposées sur un secteur angulaire α1 autour du rotor.

Le rotor 10 est monté à l'intérieur du stator et est destiné à tourner dans le stator autour de l'axe X. Le rotor 10 comporte par exemple un aimant 21 à plusieurs pôles formant la surface extérieure du rotor et en regard des bobines.

Le rotor 10 comporte un fond formant un moyeu 20 comportant, sur une face aval, opposée à celle orientée vers le boîtier un pignon 24 formant un premier planétaire du réducteur R. Le premier planétaire 24 est donc entraîné en rotation directement par le moyeu 20.

Le réducteur comporte également une première platine porte-satellite 26 et trois premiers satellites 27 montés mobiles en rotation sur une face amont de la platine porte-satellite 26 autour d'axes parallèles à l'axe X. Les premiers satellites 27 engrènent le premier planétaire 24. Un deuxième planétaire 28 est solidaire en rotation de la première platine porte-satellite 26 et est disposé sur l'axe X sur une face aval de la première platine porte-satellite 26, opposée à la face amont portant les premiers satellites 27.

Le réducteur comporte une deuxième platine porte-satellite 30 et trois deuxièmes satellites 32 montés mobiles en rotation sur une face amont de la deuxième platine porte-satellite 30 autour d'axes 32.1 parallèles à l'axe X. Le deuxième planétaire 28 engrène les deuxièmes satellites 32.

De manière avantageuse, les satellites 27 et 32 sont identiques, ce qui permet de simplifier la fabrication du motoréducteur.

L'arbre de sortie A du motoréducteur est solidaire en rotation de la deuxième platine porte-satellite 30 et fait saillie d'une face aval de la deuxième platine porte-satellite 30 opposée à la face amont portant les deuxièmes satellites 32.

L'arbre de sortie A peut être guidé en rotation par le contour de l'ouverture formée dans le couvercle.

Le réducteur comporte également un couronne dentée extérieure 34 d'axe X, disposée à l'intérieur du rotor 10 et à l'extérieur des premiers 27 et deuxièmes 32 satellites, de sorte que les satellites 27 et 32 engrènent la couronne dentée 34. Tous les éléments du réducteur sont donc disposés à l'intérieur de la couronne dentée 34. La couronne dentée 34 est fixe par rapport au carter 2.

De manière très avantageuse, la couronne dentée 34 est insérée dans le boîtier 4, par exemple par moulage. En variante, la couronne dentée 34 est fixée sur le boîtier 4 par soudage, par collage, par des vis...

De manière très avantageuse, un axe de centrage 38 unique traverse le réducteur R et le moteur M et assure le centrage des différents éléments du réducteur et du rotor 10 par rapport au stator 8. La culasse 25 comporte un passage central traversant le premier planétaire permettant le passage de l'axe de centrage 38. L'entrefer entre le rotor 10 et le stator 8 est ainsi fixé sans utiliser de palier. La suppression des paliers contribue à l'allongement de la durée de vie du motoréducteur. En outre, la réalisation du motoréducteur est simplifiée, et sa masse est réduite.

L'axe de centrage 38 est maintenu axialement et transversalement dans le motoréducteur. Pour cela, le fond intérieur du capot 5 comporte un logement 41 recevant une extrémité longitudinale 38.1 de l'axe 38, et la deuxième platine porte-satellite portant l'arbre de sortie 30 comporte également un logement 43 entre les deuxièmes satellites sur sa face amont recevant l'autre extrémité 38.2 de l'axe 38. La deuxième platine porte-satellite 30 étant guidée par le contour de l'ouverture dans le couvercle 5 via l'arbre de sortie A, l'autre extrémité de l'axe de centrage 38 est également maintenue axialement et transversalement. L'axe 38 est monté fixe dans le capot 5, par exemple l'extrémité 38.1 est montée serrée dans le logement 41 du capot 5.

En outre, le premier planétaire 24 et le deuxième planétaire 28 comportent en leur centre un passage axial 42, 44 respectivement, pour le passage de l'axe de centrage 38. Les diamètres des logements 40, 41 et des logements 42, 44 sont ajustés au diamètre de l'axe 38, afin d'assurer un maintien transversal de l'axe de centrage 38 et un bon guidage en rotation des différents éléments du réducteur.

L'axe 38 assure le guidage, le recentrage de tous les éléments mobiles et assure également la fonction de palier de glissement pour les éléments mobiles.

L'axe de centrage 38 est avantageusement en métal, par exemple en acier, avantageusement en acier inoxydable pour présenter une rigidité suffisante. Le diamètre de l'arbre peut être fixé précisément par une opération de rectification Avantageusement l'axe 38 est réalisé avec une grande précision, par exemple par usinage. Son diamètre présente avantageusement une tolérance maximale de 20 µm et une cylindricité de 5 µm.

Les jeux entre l'axe 38 qui est fixe dans le carter et les éléments mobiles sont avantageusement compris entre 20 µm et 60 µm.

Le boîtier et le couvercle sont disposés de sorte que les logements 40 et 41 assurent une coaxialité entre l'axe de centrage 38 et la couronne dentée 34.

La mise en œuvre de l'axe de centrage fixe et la précision de positionnement, qui peut être obtenue lors de la réalisation du boîtier et du couvercle qui intègre la couronne 34 et lors de leur assemblage, permet très avantageusement de ne pas utiliser de roulement à billes entre l'arbre de centrage et les éléments mobiles en rotation autour de lui.

La mise en œuvre de cet axe de centrage 38 permet de limiter l'usure du réducteur. En outre, il facilite l'assemblage. Il permet également, dans le cas d'éléments de réducteur en matériau plastique, d'assurer un jeu suffisant entre les éléments pour qu'ils s'engrènent correctement.

De manière avantageuse, les axes des satellites sur les platines porte-satellite, sont réalisés en acier, par exemple en acier inoxydable, pour améliorer encore davantage le guidage et éviter l'usure des dentures du réducteur planétaire.

De plus, la mise en œuvre d'un axe unique permet de réduire sensiblement les pertes car les éléments mobiles en rotation du réducteur tournent autour de cet axe de faible diamètre.

Le motoréducteur comporte également des capteurs de gestion 17 du moteur électrique montés sur la première carte électronique PCB1, par exemple il s'agit de capteurs à effet Hall sensible au déplacement de l'aimant 21 du rotor. Le nombre de capteurs de gestion est égal à 3m avec m est un entier supérieur égal à 1.

Les capteurs de gestion 17 sont disposés entre les bobines 12 et le rotor 10 en considérant une direction radiale et les deux capteurs de gestion d'extrémité délimitent entre eux un secteur angulaire α1.

L'arbre de sortie A est déplacé en rotation par le moteur électrique entre deux positions extrêmes PE1 et PE2. Une première position extrême PE1 correspond à une position du noyau connectant l'orifice d'entrée à l'orifice de sortie S1 et la position extrême PE2 correspond à la position du noyau connectant l'orifice d'entrée à l'orifice de sortie PE2.

Dans l'exemple représenté, le noyau pivote d'un angle de 96° pour passer de la position extrême PE1 à la position extrême PE2.

Une position médiane est située à 48° de chacune des positions extrêmes PE1 et PE2.

Le motoréducteur comporte un capteur de position angulaire 56 de l'arbre de sortie A afin de détecter la position angulaire du noyau entre les deux positions extrêmes PE1 et PE2. Le capteur de position 56 est sensible aux variations de champ magnétique, par exemple il s'agit d'un capteur à effet Hall.

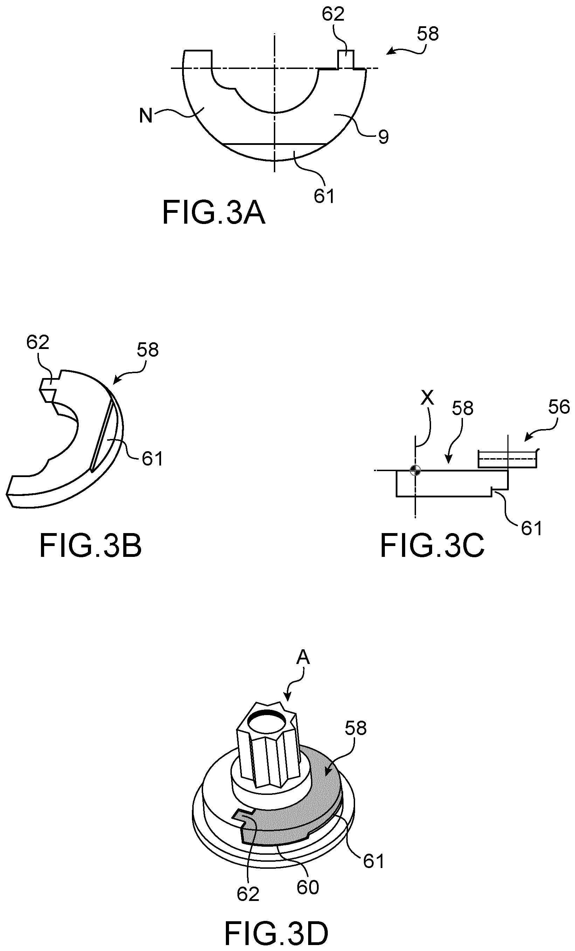

Le capteur de position est monté sur une deuxième carte électronique PCB2, et un aimant permanent 58 fixé sur l'arbre de sortie A et positionné par rapport au capteur de position 56 de sorte que son déplacement en rotation, et donc celui de l'arbre de sortie soit détecté par le capteur de position 56. Comme on peut le voir sur la figure 3C, le capteur de position est disposé à l'aplomb d'une partie de l'aimant de position en considérant la direction longitudinale. La distance entre l'aimant et le capteur 56 est par exemple égale à 1,2 mm ±0.2mm

L'aimant 58 est issu d'un aimant bague à aimantation diamétrale, i.e. dans lequel les lignes de champ sont alignées avec les diamètres. L'aimant est formé d'une portion angulaire de l'aimant bague. Les pôles sud S et nord N sont schématisés sur la figure 3A. L'aimant 58 est par exemple fabriqué à partir d'un mélange de poudres de Néodyme, de fer et de bore et un liant, tel que le Polyamide PA12, par exemple par injection.

La deuxième carte électronique PCB2 est disposée axialement éloignée de la première carte électronique PCB1. Dans l'exemple représenté, la carte PCB2 et le capteur de position sont avantageusement disposés à l'extérieur du boîtier et entourent au moins en partie l'arbre de sortie A, isolant davantage le capteur de position de l'aimant 21.

A titre d'exemple, les cartes sont distantes de 10 mm. De préférence, cette distance est la plus grand possible limitant ainsi les perturbations mutuelles.

Dans l'exemple représenté, la carte PCB2 comporte un évidement dont le rayon correspond à celui de l'arbre de sortie A de sorte à être disposée au plus près de celui-ci.

Le capteur de position 56 est monté sur la deuxième carte électronique PCB2, de telle manière que l'aimant 58 puisse prendre des positions angulaires qui affectent peu ou pas les capteurs de gestion 17.

Comme on peut le voir sur les figures 3A, 3B et 3D, l'aimant 58 a la forme d'un arc de cercle et son extension angulaire est telle que, lorsque de l'arbre de sortie A est dans l'une ou l'autre des positions extrêmes PE1, et PE2, l'aimant soit encore en regard du capteur de position et est telle qu'en considérant la projection dans un même plan normal à l'axe X des capteurs de gestion et de l'aimant 58, aucune partie de la projection de l'aimant de position 58 soit en regard des capteurs de gestion en considérant la direction radiale.

Le capteur de position 56 mesure l'angle β (°) entre le capteur et l'aimant, cet angle est mesuré entre le rayon passant par une zone médiane du capteur de position 58 et le rayon passant par la zone de jonction des deux pôles.

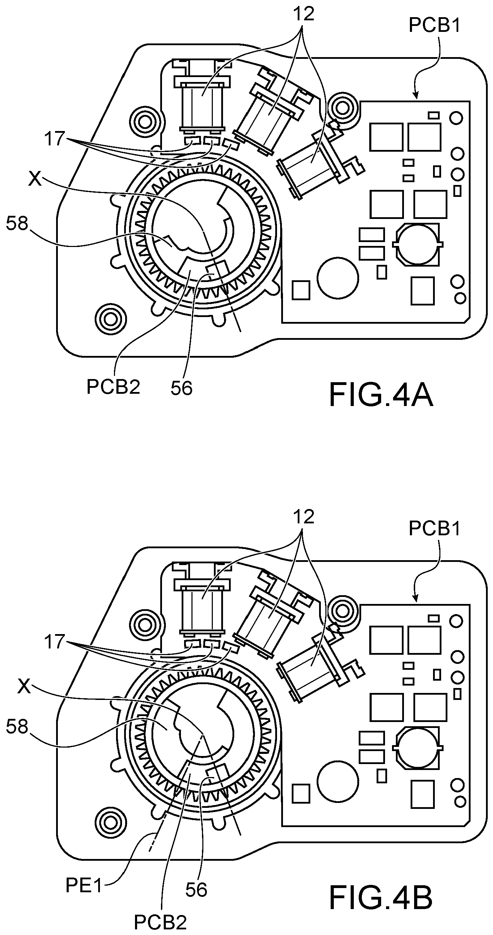

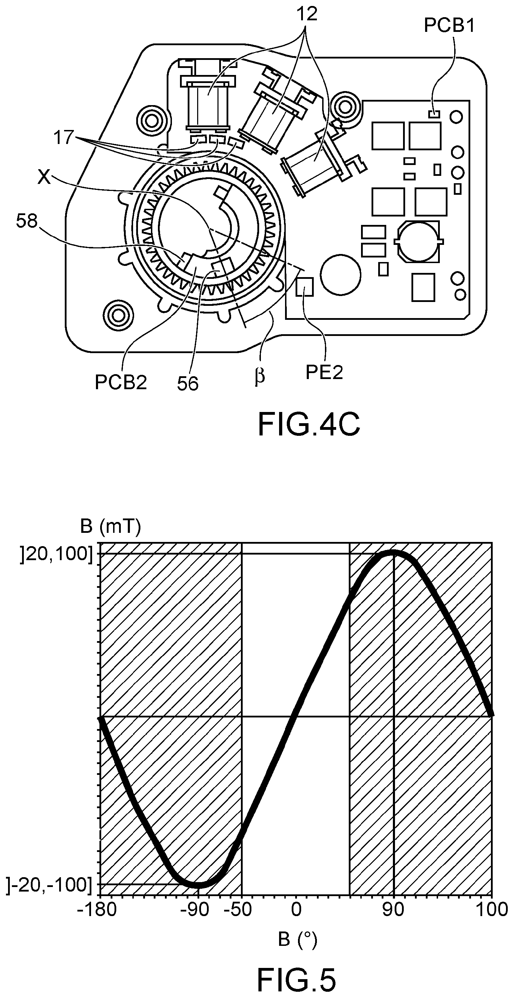

Sur les figures 4B et 4C, on peut voir l'aimant 58 dans les deux positions extrêmes PE1 et PE2 de l'arbre de sortie A. sur la figure 4A, l'aimant est dans une position centrée par rapport au capteur de position 56.

Dans l'exemple représenté (figure 3C), l'aimant 58 est en partie en regard du capteur de position 56 en considérant la direction axiale. Plus particulièrement il est situé entre les deux cartes électroniques PCB1 et PCB2.

Sur la figure 3D, on peut voir l'arbre de sortie A et l'aimant 58. L'arbre de sortie A comporte un épaulement 60 orienté vers l'aval sur lequel est monté l'aimant 58. L'aimant est par exemple encliqueté et/ou collé sur l'arbre de sortie A. Avantageusement l'aimant de position 58 est encliqueté sur l'arbre de sortie. Par exemple, l'arbre de sortie A comporte un logement pour l'aimant 58, réalisé dans l'épaulement. L'aimant 58 comporte un lamage 61 coopérant avec un méplat du logement, et une languette 62 en saillie d'une extrémité angulaire de l'aimant 58 coopérant avec un évidement du logement, assurant un maintien au moins provisoire et un détrompage de l'aimant, assurant que le pôle Nord et le pôle Sud de l'aimant sont toujours montés dans le même sens. L'aimant 58 est ensuite collé assurant sa fixation définitive sur l'arbre de sortie. De préférence, le collage est obtenu par polymérisation offrant un bon maintien à haute température. En variante le logement comporte une saillie reçue dans un évidement de l'aimant. De préférence, la profondeur du logement est tel que la surface libre de l'aimant 5 8 affleure l'épaulement 60.

De préférence, l'extension angulaire de l'aimant 58 est celle qui présente la variation la plus linéaire et offre la pente la plus importante, comme cela sera expliqué ci-dessous.

En variante, l'aimant 58 est disposé en regard du capteur de position en considérant une direction radiale, i.e. l'aimant est interposé entre l'arbre et le capteur de position. L'aimantation de l'aimant est alors adaptée.

Nous allons décrire un exemple pratique de disposition et de dimensions des capteurs et de l'aimant 58.

Les capteurs de gestion 17 sont disposés les uns à côté des autres sur un angle α1 égal à 12° sur la première carte électronique PCB2.

Le capteur de position 56 est disposé sur la deuxième carte électronique PCB1 autour de l'arbre de sortie. L'angle entre le capteur de position et l'une des capteurs de gestion situé sur un bord est égal à 142°.

Les deux positions extrêmes du noyau sont séparées d'un angle de 90°.

L'aimant 58 a une extension angulaire de 100°. Dans la position médiane du noyau et donc de l'arbre de sortie, i.e. lorsque le noyau est à mi-course, le capteur de position 56 est situé à un angle de 50° de chaque extrémité angulaire de l'aimant 58 (figure 4A). Ainsi quelle que soit la position angulaire de l'arbre de sortie A entre les deux positions extrêmes, l'aimant de position 58 est toujours en regard du capteur de position. Le capteur de position n'est pas ponctuel, mais on considère que sa position est celle du rayon passant par le milieu du capteur de position.

Quelle que soit la position angulaire de l'aimant 58, aucune de ses parties de la projection de l'aimant 58 n'est en face d'un capteur de gestion en considérant la direction radiale (figures 4B et 4C).

De manière avantageuse, l'aimant 58 et l'arbre de sortie A comportent des moyens de détrompage pour le montage de l'aimant sur l'arbre de sortie, afin de s'assurer que chaque aimant de chaque distributeur soit monté de manière identique et que chaque capteur de position fournisse la même réponse, i.e. la même variation de tension en fonction de la position angulaire du l'arbre de sortie.

Sur la figure 5, on peut voir la variation du champ magnétique en fonction de l'angle β pour un aimant bague à aimantation diamétrale. On constate que la portion angulaire entre -50° et +50° présente une variation sensiblement linéaire de pente importante.

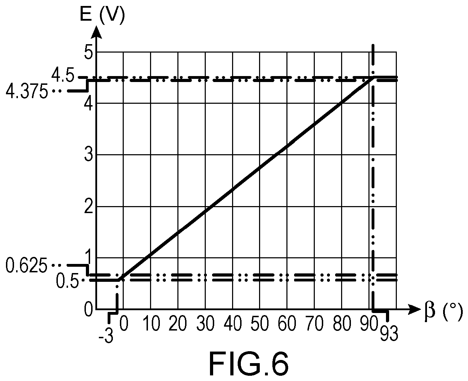

L'aimant 58 est de préférence monté pour que le capteur de position délivre une valeur de tension en fonction de la position angulaire telle que celle représentée sur la figure 6.

Si l'aimant est monté à l'envers, i.e. le pôle sud à la place du pôle nord, la pente de la variation de tension serait négative. Avantageusement, un détrompage est prévu pour éviter cette situation.

De manière très avantageuse, lors de la fabrication une étape de calibration individuelle de chaque distributeur a lieu pour garantir la même position angulaire du noyau pour une tension donnée.

Par exemple, l'arbre de sortie et l'aimant tournent d'un angle compris entre - 3° et 93°et le capteur voit un champ magnétique B de l'aimant qui varie entre - 100 mT et + 100 mT sur cette amplitude de rotation.

Le capteur est programmé pour que la position extrême de -3° et son champ correspondent à une tension de sortie de 0,5V, et pour que la position extrême de 93° et son champ correspondent à une tension de sortie E de 4,5V. A chaque position intermédiaire une tension est proportionnellement attribuée.

L'unité de commande électronique règle la position de la vanne en programmant la valeur de tension E correspondante.

La vanne est une vanne proportionnelle entre les deux sorties.

En variante, la vanne comporte une entrée et une sortie, l'ouverture ou la fermeture de la vanne est proportionnelle.

Il sera compris que l'extension angulaire de l'aimant 58 est choisie en fonction de l'angle entre les positions extrêmes du noyau.

Dans l'exemple représenté et de préférence, le moteur électrique est un moteur triphasé comportant un nombre de bobines 12 multiple de trois réparties angulairement de manière régulière autour de l'axe X. Néanmoins un moteur biphasé, et plus généralement polyphasé, ne sort pas du cadre de la présente invention.

La forme extérieure du motoréducteur n'est pas limitative, elle est choisie en fonction de l'environnement du moteur et des possibilités de fabrication.

Le distributeur hydraulique est particulièrement adapté pour le domaine automobile, notamment pour le refroidissement des moteurs à combustion interne, mais il peut être utilisé dans tout autre domaine.

## Revendications

1. Distributeur fluidique rotatif comportant un corps de vanne (B) avec au moins un orifice d'entrée d'un fluide et un orifice de sortie (O) du fluide, un noyau (N) apte à autoriser ou interrompre l'écoulement du fluide entre l'orifice d'entrée et l'orifice de sortie, ledit noyau étant mobile en rotation autour d'un axe longitudinal et configuré pour prendre deux positions angulaires extrêmes, un motoréducteur comprenant un réducteur, un moteur électrique (M) sans balai et un arbre de sortie (A) d'axe longitudinal (X), le noyau étant solidaire en rotation dudit arbre de sortie, des capteurs de gestion (17) du moteur électrique montés sur une première carte électronique (PCB1) en regard d'une face latérale d'un rotor (10) du motoréducteur, au moins un capteur de position angulaire pour détecter la position angulaire de l'arbre de sortie, monté sur une deuxième carte électronique (PCB2), la première carte électronique (PCB1) et la deuxième carte électronique (PCB2) étant disposées dans deux plans distincts normaux à l'axe longitudinal (X), un aimant permanent (58) monté fixe en rotation sur l'arbre de sortie (A) et disposé de sorte à être détecté par le capteur de position angulaire, dans lequel ledit aimant permanent (58) a la forme d'un arc de cercle dont la position et l'extension angulaire sont telles que, quelle que soit la position angulaire de l'arbre de sortie (A) pour placer le noyau dans toute position entre ses positions angulaires extrêmes, en considérant une projection dudit aimant et la projection des capteurs de gestion dans un même plan normal à l'axe longitudinal, la projection de l'aimant permanent (58) ne soit pas en regard de la projection des capteurs de gestion (17) en considérant une direction radiale.

2. Distributeur fluidique rotatif selon la revendication 1, dans lequel le motoréducteur comporte un carter (2) logeant le moteur et le réducteur et dans lequel la première carte électronique (PCB1) est logée dans le carter et la deuxième carte électronique (PCB2) est disposée à l'extérieur du carter entre le carter et corps de vanne.

3. Distributeur fluidique rotatif selon la revendication 1 ou 2, dans lequel l'aimant permanent (58) est un aimant à aimantation diamétrale.

4. Distributeur fluidique rotatif selon la revendication 1, 2 ou 3, dans lequel le corps de vanne comporte deux orifices de sortie, et dans lequel l'une des positions angulaires extrêmes correspond au moins principalement à un écoulement entre l'orifice d'entrée et l'un des orifices de sortie, et l'autre position angulaire extrême correspond au moins principalement à un écoulement entre l'orifice d'entrée et l'un des orifices de sortie.

5. Distributeur fluidique rotatif selon l'une des revendications 1 à 4, comportant des moyens d'orientation de l'aimant permanent (58) par rapport à l'arbre de sortie (A) de sorte à positionner le pôle nord et le pôle sud de l'aimant dans une orientation donnée par rapport à l'arbre de sortie (A).

6. Distributeur fluidique rotatif selon la revendication 5, dans lequel les moyens d'orientation comportent un lamage (61) formé dans l'aimant coopérant avec un méplat porté par l'arbre de sortie (A) et un élément en saillie (62) porté par l'arbre de sortie (A) ou l'aimant permanent (58) coopérant un élément en creux porté par l'aimant permanent (58) ou l'arbre de sortie (A) respectivement.

7. Distributeur fluidique rotatif selon l'une des revendications 1 à 6, dans lequel l'aimant permanent (58) est collé sur l'arbre de sortie.

8. Distributeur fluidique rotatif selon l'une des revendications 1 à 7, dans lequel le moteur comporte des bobines (12) fixées et connectées électriquement à la première carte électronique (PCB1).

9. Distributeur fluidique rotatif selon la revendication 8, comportant trois bobines (12) ou un multiple de trois.

10. Distributeur fluidique rotatif selon l'une des revendications 1 à 9 dans lequel le réducteur (R) est logé au moins en partie dans le rotor (10).

11. Distributeur fluidique rotatif selon l'une des revendications 1 à 10, dans lequel le réducteur est un réducteur planétaire, le motoréducteur comportant un axe unique formant l'axe de rotation du rotor et l'axe du réducteur planétaire.

## Patentansprüche

1. Drehbarer Fluidverteiler, der einen Ventilkörper (B) mit mindestens einer Einlassöffnung für ein Fluid und einer Auslassöffnung (O) für das Fluid, einen Kern (N), der imstande ist, die Strömung des Fluids zwischen der Einlassöffnung und der Auslassöffnung zuzulassen oder zu unterbrechen, beinhaltet, wobei der Kern um eine Längsachse drehbeweglich ist und konfiguriert ist, um zwei extreme Winkelpositionen einzunehmen, einen Getriebemotor, der ein Getriebe, einen bürstenlosen Elektromotor (M) und eine Ausgangswelle (A) mit einer Längsachse (X) umfasst, wobei der Kern in Drehung fest mit der Ausgangswelle verbunden ist, Management-Sensoren (17) des Elektromotors, die auf einer ersten Elektronikkarte (PCB1) gegenüber einer Seitenfläche eines Rotors (10) des Getriebemotors montiert sind, mindestens einen Winkelpositionssensor zum Erkennen der Winkelposition der Abtriebswelle, der auf einer zweiten Elektronikkarte (PCB2) montiert ist, wobei die erste Elektronikkarte (PCB1) und die zweite Elektronikkarte (PCB2) in zwei unterschiedlichen Ebenen normal zur Längsachse (X) angeordnet sind, einen Permanentmagneten (58), der drehfest an der Abtriebswelle (A) montiert, und angeordnet ist, um vom Winkelpositionssensor erkannt zu werden, wobei der Permanentmagnet (58) die Form eines Kreisbogens aufweist, dessen Position und Winkelerstreckung derart sind, sodass unabhängig von der Winkelposition der Ausgangswelle (A) zum Platzieren des Kerns in jede Position zwischen seinen extremen Winkelpositionen, unter Annahme einer Projektion des Magneten und der Projektion der Management-Sensoren in einer gleichen Ebene normal zur Längsachse, die Projektion des Permanentmagneten (58) sich nicht gegenüber der Projektion der Management-Sensoren (17) unter Annahme einer radialen Richtung befindet.

2. Drehbarer Fluidverteiler nach Anspruch 1, wobei der Getriebemotor ein Gehäuse (2) beinhaltet, das den Motor und das Getriebe aufnimmt, und wobei die erste Elektronikkarte (PCB1) im Gehäuse untergebracht ist und die zweite Elektronikkarte (PCB2) außerhalb des Gehäuses zwischen dem Gehäuse und dem Ventilkörper angeordnet ist.

3. Drehbarer Fluidverteiler nach Anspruch 1 oder 2, wobei der Permanentmagnet (58) ein Magnet mit diametraler Magnetisierung ist.

4. Drehbarer Fluidverteiler nach Anspruch 1, 2 oder 3, wobei der Ventilkörper zwei Auslassöffnungen beinhaltet, und wobei eine der extremen Winkelpositionen mindestens hauptsächlich einer Strömung zwischen der Einlassöffnung und einer der Auslassöffnungen entspricht, und die andere extreme Winkelposition mindestens hauptsächlich einer Strömung zwischen der Einlassöffnung und einer der Auslassöffnungen entspricht.

5. Drehbarer Fluidverteiler nach einem der Ansprüche 1 bis 4, der Mittel zur Ausrichtung des Permanentmagneten (58) in Bezug auf die Ausgangswelle (A) beinhaltet, um den Nordpol und den Südpol des Magneten in einer bestimmten Ausrichtung in Bezug auf die Ausgangswelle (A) zu positionieren.

6. Drehbarer Fluidverteiler nach Anspruch 5, wobei die Mittel zur Ausrichtung eine Senkung (61), die im Magneten gebildet ist, der mit einer von der Abtriebswelle (A) getragenen Abflachung zusammenwirkt, und ein vorstehendes Element (62) beinhalten, das von der Abtriebswelle (A) oder dem Permanentmagneten (58) getragen wird, das mit einem hohlen Element zusammenwirkt, das jeweils von dem Permanentmagneten (58) oder der Abtriebswelle (A) getragen wird.

7. Drehbarer Fluidverteiler nach einem der Ansprüche 1 bis 6, wobei der Permanentmagnet (58) auf die Ausgangswelle geklebt ist.

8. Drehbarer Fluidverteiler nach einem der Ansprüche 1 bis 7, wobei der Motor Spulen (12) beinhaltet, die an der ersten Elektronikkarte (PCB1) befestigt und damit elektrisch verbunden sind.

9. Drehbarer Fluidverteiler nach Anspruch 8, der drei Spulen (12) oder ein Vielfaches von drei umfasst.

10. Drehbarer Fluidverteiler nach einem der Ansprüche 1 bis 9, wobei das Getriebe (R) mindestens teilweise im Rotor (10) untergebracht ist.

11. Drehbarer Fluidverteiler nach einem der Ansprüche 1 bis 10, wobei das Getriebe ein Planetengetriebe ist, wobei der Getriebemotor eine einzige Achse beinhaltet, welche die Drehachse des Rotors und die Achse des Planetengetriebes bildet.

## Claims

1. Rotary fluid distributor including a valve body (B) with at least one fluid inlet port and one fluid outlet (O) port, a core (N) capable of allowing or interrupting the flow of fluid between the inlet port and the outlet port, said core being rotatably movable about a longitudinal axis and configured to assume two end angular positions, a gear motor including a gear reducer, a brushless electric motor (M) and an output shaft (A) with a longitudinal axis (X), the core being rotatably integral with said output shaft, sensors (17) for managing the electric motor mounted to a first electronic board (PCB1) facing a side face of a rotor (10) of the gear motor, at least one angular position sensor for detecting the angular position of the output shaft, mounted to a second electronic board (PCB2), the first electronic board (PCB1) and the second electronic board (PCB2) being disposed in two distinct planes normal to the longitudinal axis (X), a permanent magnet (58) rotatably fixedly mounted to the output shaft (A) and disposed so as to be detected by the angular position sensor, wherein said permanent magnet (58) has the shape of an arc of a circle whose position and angular extension are such that whatever the angular position of the output shaft (A) to place the core in any position between its end angular positions, considering a projection of said magnet and the projection of the management sensors onto the same plane normal to the longitudinal axis, the projection of the permanent magnet (58) does not face the projection of the management sensors (17) considering a radial direction.

2. Rotary fluid distributor according to claim 1, wherein the gear motor includes a casing (2) housing the motor and the gear reducer and wherein the first electronic board (PCB1) is housed in the casing and the second electronic board (PCB2) is disposed outside the casing between the casing and valve body.

3. Rotary fluidic distributor according to claim 1 or 2, wherein the permanent magnet (58) is a diametrically magnetised magnet.

4. Rotary fluidic distributor according to claim 1, 2 or 3, wherein the valve body includes two outlet ports, and wherein one of the end angular positions corresponds at least predominantly to flow between the inlet port and one of the outlet ports, and the other end angular position corresponds at least predominantly to flow between the inlet port and one of the outlet ports.

5. Rotary fluid distributor according to any of claims 1 to 4, including means for orienting the permanent magnet (58) relative to the output shaft (A) so as to position the north pole and south pole of the magnet in a given orientation relative to the output shaft (A).

6. Rotary fluidic distributor according to claim 5, wherein the orientation means includes a counterbore (61) formed in the magnet cooperating with a flat member carried by the output shaft (A) and a projecting element (62) carried by the output shaft (A) or the permanent magnet (58) cooperating with a recessed element carried by the permanent magnet (58) or the output shaft (A) respectively.

7. Rotary fluidic distributor according to any of claims 1 to 6, wherein the permanent magnet (58) is bonded to the output shaft.

8. Rotary fluidic distributor according to any of claims 1 to 7, wherein the motor includes coils (12) attached and electrically connected to the first electronic board (PCB1).

9. Rotary fluidic distributor according to claim 8, including three or a multiple of three coils (12).

10. Rotary fluid distributor according to any of claims 1 to 9, wherein the gear reducer (R) is at least partly housed in the rotor (10).

11. Rotary fluid distributor according to any one of claims 1 to 10, wherein the gear reducer is a planetary gear reducer, the gear motor including a single axis forming the axis of rotation of the rotor and the axis of the planetary gear reducer.
